# EUROPEAN PATENT APPLICATION

(11) **EP 4 776 389 A1**
(43) Date of publication of application: **15.07.2026**
(21) Application number: 24862439.7
(22) Date of filing: 16.07.2024
(51) Int. Cl.: H01M 10/658, H01M 10/613, H01M 10/625, H01M 10/6556

(54) **HEAT TRANSFER SUPPRESSION SHEET, HEAT TRANSFER SUPPRESSION SHEET WITH PEDESTAL, AND BATTERY PACK**

(30) Priority: 04.09.2023 JP 2023142914
(71) Applicant: IBIDEN CO., LTD., Ogaki-shi, Gifu 503-8604 (JP)
(72) Inventor: KINO Daisuke, Ibi-gun, Gifu 501-0695 (JP)
(74) Representative: Hoffmann Eitle
(86) International application number: PCT/JP2024/025460
(87) International publication number: WO 2025/052783

(57) **Abstract**

The present invention provides a heat transfer suppression sheet capable of effectively suppressing high-temperature heat transfer from a battery cell undergoing thermal runaway, and having excellent followability to expansion and contraction of the battery cell. The present invention also provides a highly safe battery pack including such a heat transfer suppression sheet. In a heat transfer suppression sheet (1), a heat insulation layer (10) and a heat conduction layer (30) are stacked via an organic elastic layer (20). In a pedestal-attached heat transfer suppression sheet (60), a battery cell pedestal (70), which is composed of a heat insulating material and on which a battery cell (40) is to be placed, is integrally provided on one surface or both surfaces of the heat transfer suppression sheet (1). In a battery pack (100), the heat transfer suppression sheet (1) is interposed between a plurality of battery cells (40) with a heat conduction layer (30) thereof in contact with main surfaces of the battery cells (40), and the battery cells (40) are connected in series or in parallel. In addition, in the battery pack (100), the battery cells (40) are placed on the battery cell pedestal (70) of the pedestal-attached heat transfer suppression sheet (60).

## Description

### TECHNICAL FIELD

The present invention relates to a heat transfer suppression sheet and a pedestal-attached heat transfer suppression sheet that are suitable for use in a battery pack. The present invention also relates to a battery pack including such a heat transfer suppression sheet.

### BACKGROUND ART

In recent years, from the viewpoint of environmental protection, an electric vehicle or a hybrid vehicle driven by an electric motor has been actively developed. The electric vehicle or the hybrid vehicle is equipped with a battery pack in which a plurality of battery cells are connected in series or in parallel to serve as a power source for a driving electric motor.

A lithium ion secondary battery, which has higher capacity and is capable of higher output than a lead-acid battery, a nickel-metal hydride battery, or the like, is mainly used for the battery cells. In the case where a certain battery cell suddenly rises in temperature due to an internal short circuit or overcharging of the battery, and then causes thermal runaway that continues to generate heat, intense heat or a flame from the battery cell undergoing thermal runaway may propagate to other adjacent battery cells. Therefore, a heat transfer suppression sheet is interposed between the battery cells to prevent the transfer and spread of the thermal runaway.

As a heat transfer suppression sheet, for example, Patent Literature 1 discloses a multilayer body including a rubber sheet composed of a rubber-like elastic body, a heat insulation sheet stacked on both surfaces of the rubber sheet, and a heat conduction sheet stacked on an outer side of the heat insulation sheet and having thermal conductivity more excellent than that of the rubber sheet and the heat insulation sheet. The rubber sheet has a function of enhancing adhesion between a heat source (battery cell) and the heat conduction sheet by exhibiting a cushioning property, and a function as a protective member that prevents the heat conduction sheet and the heat insulation sheet from being damaged by a load applied to the heat conduction sheet and the heat insulation sheet.

### CITATION LIST

### PATENT LITERATURE

Patent Literature 1: JP2021-98308A

### SUMMARY OF INVENTION

### TECHNICAL PROBLEM

However, in the heat transfer suppression sheet in Patent Literature 1, since elasticity of the rubber sheet is transferred to the heat conduction sheet via the heat insulation sheet, the adhesion of the heat transfer sheet to the heat source is not sufficient. In a battery pack, in addition to measures against a battery cell undergoing thermal runaway, followability of the heat transfer suppression sheet is strongly required since the battery cell expands and contracts during charging and discharging.

The present invention has been made in view of the above problems, and an object of the present invention is to provide a heat transfer suppression sheet capable of effectively suppressing high-temperature heat transfer from a battery cell undergoing thermal runaway, and having excellent followability to expansion and contraction of the battery cell. Another object of the present invention is to provide a highly safe battery pack including a heat transfer suppression sheet that effectively suppresses heat transfer from a battery cell undergoing thermal runaway, and that has excellent followability to expansion and contraction of the battery cell.

### SOLUTION TO PROBLEM

The above object of the present invention is achieved by the following configuration [1] relating to a heat transfer suppression sheet.
[1] A heat transfer suppression sheet including: a heat insulation layer and a heat conduction layer which are stacked via an organic elastic layer.
   Preferred embodiments of the present invention relating to the heat transfer suppression sheet relate to the following [2].
[2] The heat transfer suppression sheet according to [1], in which the heat conduction layer is composed of a resin containing at least one kind selected from SiC, BN, Al₂O₃, AlN, Si₃N₄, and a carbon-based material.
   The above object of the present invention is achieved by the following configuration [3] relating to a pedestal-attached heat transfer suppression sheet.
[3] A pedestal-attached heat transfer suppression sheet including:
   a pedestal composed of a heat insulating material, the pedestal being configured to be interposed between a battery cell and a cooling plate in a battery pack so that the battery cell can be placed on the pedestal, and
   the pedestal is integrally provided on one surface or both surfaces of a heat transfer suppression sheet in which a heat insulation layer and a heat conduction layer are stacked via an organic elastic layer.
   Preferred embodiments of the present invention relating to the pedestal-attached heat transfer suppression sheet relate to the following [4].
[4] The pedestal-attached heat transfer suppression sheet according to [3], in which the heat conduction layer is composed of a resin containing at least one kind selected from SiC, BN, Al₂O₃, AlN, Si₃N₄, and a carbon-based material.
   The above object of the present invention is achieved by the following configuration [5] or [6] relating to a battery pack.
[5] A battery pack, in which
   the heat transfer suppression sheet according to [1] or [2] is interposed between battery cells with the heat conduction layer in contact with main surfaces of the battery cells, and
   the battery cells are connected each other in series or in parallel.
[6] A battery pack, in which
   a battery cell is placed on the the pedestal in the pedestal-attached heat transfer suppression sheet according to [3] or [4], the pedestal-attached heat transfer suppression sheet being provided on a cooling plate,
   the pedestal-attached heat transfer suppression sheet is interposed between battery cells with the heat conduction layer in contact with a main surface of the battery cell, and
   the battery cells are connected each other in series or in parallel.

### ADVANTAGEOUS EFFECTS OF INVENTION

In the heat transfer suppression sheet according to the present invention, since an elastic force of the organic elastic layer is effectively transferred to the heat conduction layer and adhesion between the heat conduction layer and the battery cell is enhanced, followability of the battery cell to expansion and contraction is enhanced.

In addition, intense heat or a flame from the battery cell undergoing thermal runaway is conducted to the organic elastic layer via the heat conduction layer, and thus the organic elastic layer disappears to generate a space. Since this space is an air layer, a heat insulation property is high, and a higher heat insulation property is obtained in combination with heat insulation by the heat insulation layer.

Further, in the case where the heat conduction layer is composed of a resin containing at least one kind selected from SiC, BN, Al₂O₃, AlN, Si₃N₄, and a carbon-based material, the heat conduction layer generates char (carbon material), and thus the heat insulation property is further enhanced.

In the pedestal-attached heat transfer suppression sheet according to the present invention, since the pedestal composed of a heat insulating material for placing the battery cell is integrally provided on the heat transfer suppression sheet, in addition to the effects of the heat transfer suppression sheet described above, heat from a bottom surface of the battery cell can be effectively insulated, and thus a heat insulation performance is further enhanced.

The battery pack including the heat transfer suppression sheet or the pedestal-attached heat transfer suppression sheet according to the present invention has excellent safety since intense heat or a flame from a battery cell undergoing thermal runaway is effectively suppressed from being transferred to adjacent battery cells, and further, followability to expansion and contraction of the battery cell is excellent.

### BRIEF DESCRIPTION OF DRAWINGS

[Fig. 1] Fig. 1 is a cross-sectional view schematically showing a heat transfer suppression sheet according to one embodiment of the present invention.
[Fig. 2] Fig. 2 is a diagram illustrating an effect of suppressing heat transfer to a battery cell undergoing thermal runaway in the heat transfer suppression sheet shown in Fig. 1.
[Fig. 3] Fig. 3 is a cross-sectional view schematically showing a pedestal-attached heat transfer suppression sheet according to one embodiment of the present invention.
[Fig. 4] Fig. 4 is a schematic diagram showing a battery pack (No. 1) including the heat transfer suppression sheet according to the present invention shown in Fig. 1.
[Fig. 5] Fig. 5 is a schematic diagram showing a battery pack (No. 2) including the pedestal-attached heat transfer suppression sheet according to the present invention shown in Fig. 3.

### DESCRIPTION OF EMBODIMENTS

Hereinafter, embodiments of the present invention will be specifically described. Note that, the present invention is not limited to the embodiments described below, and can be freely changed and implemented without departing from the gist of the present invention.

### [Heat Transfer Suppression Sheet]

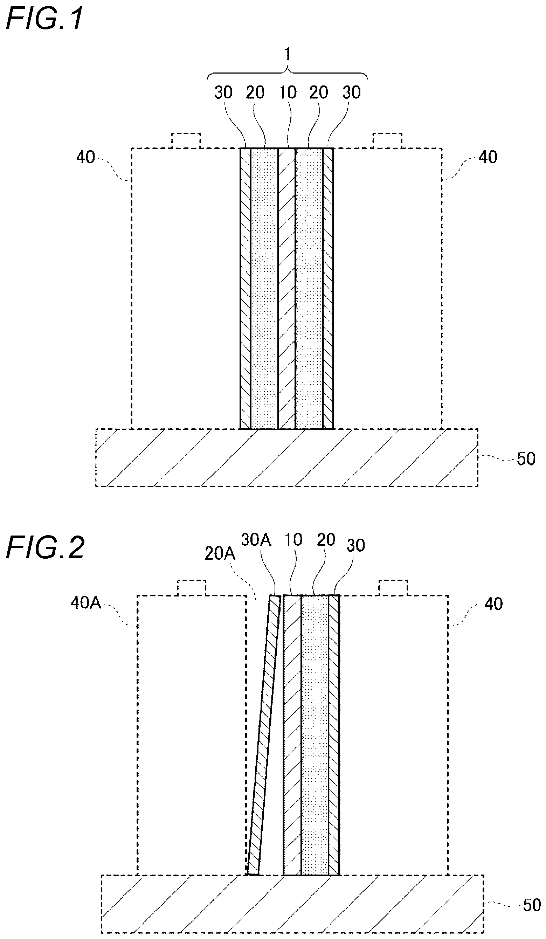

Fig. 1 is a cross-sectional view schematically showing a heat transfer suppression sheet 1 according to one embodiment of the present invention. The heat transfer suppression sheet 1 is formed by stacking a heat conduction layer 30 on both surfaces of a heat insulation layer 10 via an organic elastic layer 20. Respective layers are integrated each other by bonding with an adhesive or a double-sided adhesive tape or by thermal fusion. In a battery pack, the heat transfer suppression sheet 1 is interposed between battery cells 40 indicated by dotted lines in the drawing.

A heat insulation material constituting the heat insulation layer 10 is not particularly limited, and materials used in the related art can be used, and it is preferable to contain the following composition.

The heat insulation material may be a heat insulation material containing an inorganic particle and an organic fiber. In addition, the heat insulation material includes a plurality of three-dimensionally connected pores between the inorganic particle and the organic fiber. Note that, the organic fiber includes a fusion portion covering at least a portion of a surface thereof, and at least a portion of the inorganic particle is fused to the surface of the organic fiber by the fusion portion. Accordingly, the surface of the organic fiber is covered with the inorganic particle.

Since the heat insulation material in this manner includes the three-dimensionally connected pores, an air heat insulation effect can be obtained, and a heat insulation performance can be improved. In addition, since the heat insulation material contains the organic fiber having high flexibility, the flexibility of the heat insulation material can be improved, organic fibers are likely to be entangled with each other, and a strength of the entire heat insulation material can be improved. Further, when the pores are present, a cushioning property of the entire heat insulation material is improved. Therefore, when the battery cell 40 expands during charging and discharging, the heat insulation material can absorb the expansion of the battery cell 40. Therefore, it is possible to suppress breakage of the heat insulation layer 10 containing such a heat insulation material.

In addition, it is preferable that at least some of the pores communicate with the surface of the heat insulation material and open towards the outside. Once the pores are formed in this manner, when thermal runaway is occurred in the battery cell 40, even in the case where intense heat is transferred to the heat insulation layer 10 via the heat conduction layer 30 and the organic fiber is decomposed, a decomposition gas does not remain inside the heat insulation material but is released to the outside through the pores. Therefore, from this viewpoint, the effect of preventing the heat insulation layer 10 from being damaged can be also obtained.

As described above, when the fusion portion on an outer peripheral surface of the organic fiber fixes the inorganic particle to the organic fiber, it is possible to obtain an effect of suppressing the inorganic particle from falling off (powder falling). Therefore, for example, even in the case where the battery cell 40 expands and a compressive stress or impact is applied to the heat insulation layer 10, an effect of retaining a shape of the heat insulation material can be further enhanced, and a decrease in heat insulation effect due to compressive deformation of the heat insulation material can be prevented.

In addition, the heat insulation material preferably contains an inorganic fiber. Since the inorganic fiber is less likely to decompose even at a high temperature, the inorganic fiber remains even when thermal runaway is occurred in the battery cell 40 and the organic fiber in the heat insulation material decomposes, so that the shape of the heat insulation material can be reliably retained. In addition, since the organic fiber having flexibility is likely to be entangled with the inorganic fiber, which is relatively hard, and a three-dimensional framework is formed by the inorganic fiber and the organic fiber, the strength of the heat insulation material can be further improved.

Note that, the heat insulation material may be produced by either a wet method or a dry method.

Further, a mica sheet may be stacked on at least one of a first surface and a second surface orthogonal to a thickness direction of the heat insulation material. Mica has excellent heat resistance and insulating properties, and the mica sheet obtained by processing a material containing mica into a sheet shape also has excellent impact resistance. Therefore, in the case where the battery cell 40 ruptures due to a high temperature and scattered matters are generated, since the heat insulation material is protected by the mica sheet, it is possible to suppress damage to the heat insulation layer 10.

The organic elastic layer 20 may be either a sponge-like member having air bubbles therein or a rubber-like elastic body having no air bubbles, and is more preferably a sponge-like member in terms of an elastic performance and a heat insulation performance by air to be air bubbles. Examples of an organic material constituting the organic elastic layer 20 include thermosetting elastomers such as a urethane rubber, an isoprene rubber, an ethylene propylene rubber, a natural rubber, an ethylene propylene diene rubber, a nitrile rubber (NBR), and a styrene butadiene rubber (SBR), thermoplastic elastomers such as urethane-based, ester-based, styrene-based, olefin-based, butadiene-based, fluorine-based, and siloxane-based elastomers, and a composite thereof.

The heat conduction layer 30 is a member that comes into contact with the battery cell 40 to transfer heat from the battery cell 40, and is also required to have high insulating properties since it comes into contact with the battery cell 40. Therefore, a material thereof is not limited as long as it has excellent thermal conductivity and insulating properties, and a graphite film obtained by firing a resin, a sheet containing carbon and a resin, or the like can be used. Examples of the resin include thermoplastic resins such as a polyphenylene sulfide (PPS), a polyether ether ketone (PEEK), a polyamide-imide (PAI), and an aromatic polyamide (aramid fiber). Examples of carbon include graphite, carbon black, diamond, and diamond-like carbon.

In order to further enhance the thermal conductivity, a thermally conductive filler such as SiC, BN, Al₂O₃, AlN, and Si₃N₄ may be dispersed in the resin.

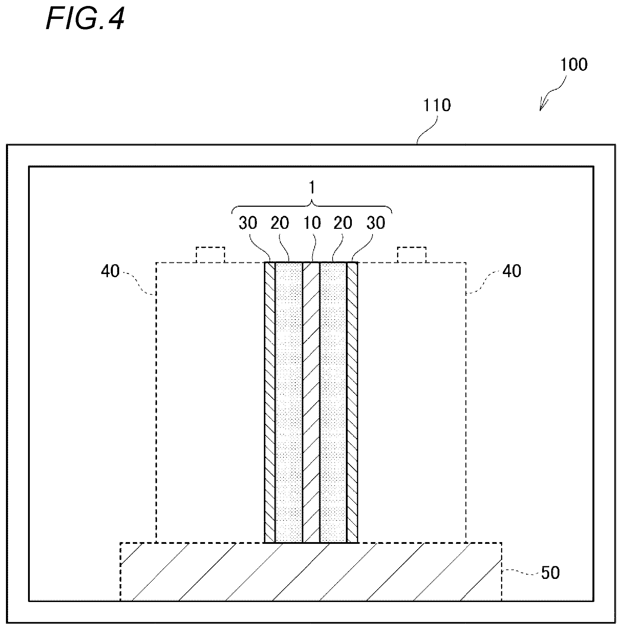

The heat transfer suppression sheet 1 is a stacked body including the heat insulation layer 10, the organic elastic layer 20, and the heat conduction layer 30, and is interposed between the battery cells 40. As shown in Fig. 4, in a battery pack 100, the battery cells 40 are generally placed on a cooling plate 50, and as shown in Fig. 1, one end surface (lower end surface in Fig. 1) of the heat transfer suppression sheet 1 is in contact with the cooling plate 50 indicated by a broken line. Therefore, a part of the heat from the battery cell 40 is directly conducted to the cooling plate 50 through a bottom surface of the battery cell 40, and the remaining heat is conducted to the cooling plate 50 via the heat conduction layer 30 of the heat transfer suppression sheet 1 or conducted to the heat insulation layer 10 via the organic elastic layer 20.

Note that, the cooling plate 50 is not particularly limited as long as it has a cooling function. For example the cooling plate 50 has a structure in which a circulation path is provided inside a metal plate composed of aluminum, an aluminum alloy, or the like and a coolant flows through the circulation path. Alternatively, a gel plate or the like can also be used.

As shown in Fig. 2, when thermal runaway is occurred in a certain battery cell 40A, intense heat from the battery cell 40A is transferred, via a heat conduction layer 30A adjacent to the battery cell 40A, to an organic elastic layer 20A adjacent to the heat conduction layer 30A. Since the organic elastic layer 20A is an organic material, the organic elastic layer 20A easily melts, decomposes, and disappears at a relatively low temperature. At the same time, the heat conduction layer 30A is pressed toward the heat insulation layer 10 by blast (pressure due to cell expansion) from the battery cell 40A, and a space is generated between the heat conduction layer 30A and the battery cell 40A or between the heat conduction layer 30A and the heat insulation layer 10. Since this space is an air layer, a heat insulation property is high, and a higher heat insulation property is obtained in combination with heat insulation by the heat insulation layer 10.

In addition, the heat conduction layer 30A also generates char (carbon material) to prevent the flame spread from the battery cell 40A.

In this manner, the heat transfer suppression sheet 1 is formed by stacking the heat conduction layer 30 on both surfaces of the heat insulation layer 10 with the organic elastic layer 20 interposed therebetween, so that the elastic performance and the heat insulation performance are more excellent.

### [Pedestal-attached Heat Transfer Suppression Sheet]

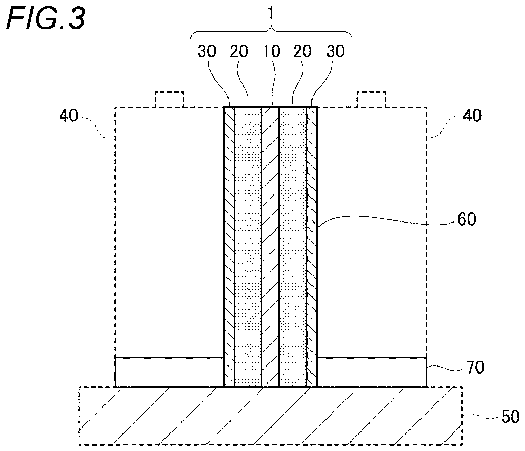

In addition, a battery cell pedestal 70 for placing the battery cell 40 may be integrally attached to the above heat transfer suppression sheet 1. Fig. 3 shows one embodiment of a pedestal-attached heat transfer suppression sheet 60 in which the battery cell pedestal 70 is integrated. In the pedestal-attached heat transfer suppression sheet 60, the battery cell pedestal 70 is attached to lower ends of both surfaces of the heat conduction layer 30 of the heat transfer suppression sheet 1. The battery cell pedestal 70 is bonded by an adhesive or a double-sided adhesive tape.

The battery cell pedestal 70 is composed of a heat insulating material, and protects the surroundings from intense heat or a flame from the bottom surface of the battery cell 40 undergoing thermal runaway. In addition, intense heat and a flame from other portions of the battery cell 40 undergoing thermal runaway are prevented in the same manner as in the above heat transfer suppression sheet 1.

Note that, the heat insulating material constituting the battery cell pedestal 70 may be the heat insulation material constituting the heat insulation layer 10 of the above heat transfer suppression sheet 1, or may be another heat insulating material.

### [Battery Pack (No. 1)]

Fig. 4 is a schematic diagram showing the battery pack 100 including the heat transfer suppression sheet 1 shown in Fig. 1. As shown in Fig. 4, in the battery pack 100, a plurality of battery cells 40 are placed on a surface of the cooling plate 50, and the heat transfer suppression sheet 1 is interposed between the battery cells 40. The battery cells 40 are connected in series or in parallel by a bus bar. The heat transfer suppression sheet 1, the battery cells 40, and the cooling plate 50 are housed in a battery case 110.

In the heat transfer suppression sheet 1, the safety can be ensured due to the generation of the air layer generated by the disappearance of the organic elastic layer 20 and the char of the heat conduction layer 30 as described above, even when thermal runaway is occurred in a certain battery cell 40.

### [Battery Pack (No. 2)]

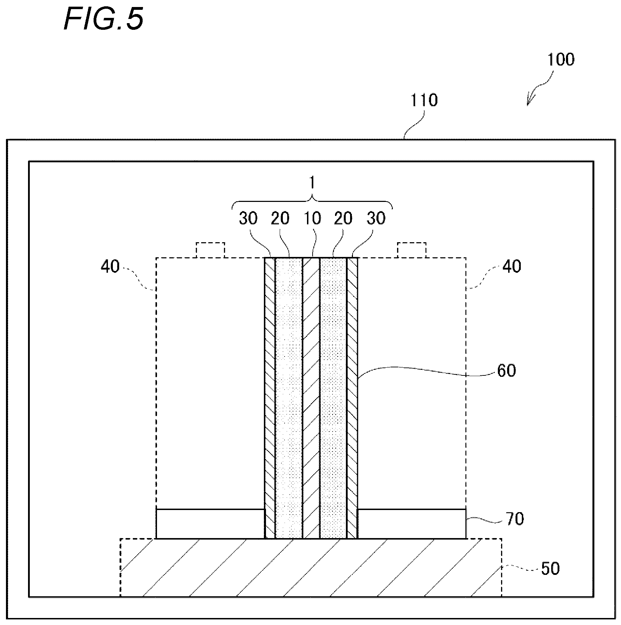

Fig. 5 is a schematic diagram showing the battery pack 100 including the pedestal-attached heat transfer suppression sheet 60 shown in Fig. 3. As shown in Fig. 5, in the battery pack 100, the pedestal-attached heat transfer suppression sheet 60 is placed on the surface of the cooling plate 50, and the battery cell 40 is placed on the battery cell pedestal 70. The heat transfer suppression sheet 1 is interposed between the battery cells 40. The battery cells 40 are connected in series or in parallel by a bus bar, and the pedestal-attached heat transfer suppression sheet 60, the battery cells 40, and the cooling plate 50 are housed in the battery case 110.

In the pedestal-attached heat transfer suppression sheet 60, in addition to the heat insulation effect due to the generation of the air layer generated by the disappearance of the organic elastic layer 20 and the char of the heat conduction layer 30, the heat insulation effect of the battery cell pedestal 70 composed of the heat insulating material is added, and thus the safety is further enhanced.

Although various embodiments have been described above with reference to the drawings, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that, the present application is based on a Japanese patent application (Japanese Patent Application No. 2023-142914) filed on September 4, 2023, and the contents thereof are incorporated herein by reference.

### REFERENCE SIGNS LIST

1 heat transfer suppression sheet
10 heat insulation layer
20, 20A organic elastic layer
30 heat conduction layer
40 battery cell
50 cooling plate
60 pedestal-attached heat transfer suppression sheet
70 battery cell pedestal
100 battery pack
110 battery case

## Claims

1. A heat transfer suppression sheet comprising:
a heat insulation layer and a heat conduction layer which are stacked via an organic elastic layer.

2. The heat transfer suppression sheet according to claim 1, wherein the heat conduction layer is composed of a resin containing at least one kind selected from SiC, BN, Al₂O₃, AlN, Si₃N₄, and a carbon-based material.

3. A pedestal-attached heat transfer suppression sheet comprising:
a pedestal composed of a heat insulating material, the pedestal being configured to be interposed between a battery cell and a cooling plate in a battery pack so that the battery cell can be placed on the pedestal, wherein
the pedestal is integrally provided on one surface or both surfaces of a heat transfer suppression sheet in which a heat insulation layer and a heat conduction layer are stacked via an organic elastic layer.

4. The pedestal-attached heat transfer suppression sheet according to claim 3, wherein the heat conduction layer is composed of a resin containing at least one kind selected from SiC, BN, Al₂O₃, AlN, Si₃N₄, and a carbon-based material.

5. A battery pack, wherein
the heat transfer suppression sheet according to claim 1 or 2 is interposed between battery cells with the heat conduction layer in contact with a main surface of the battery cell, and
the battery cells are connected each other in series or in parallel.

6. A battery pack, wherein
a battery cell is placed on the pedestal in the pedestal-attached heat transfer suppression sheet according to claim 3 or 4, the pedestal-attached heat transfer suppression sheet being provided on a cooling plate,
the pedestal-attached heat transfer suppression sheet is interposed between battery cells with the heat conduction layer in contact with a main surface of the battery cell, and
the battery cells are connected each other in series or in parallel.
